# EUROPÄISCHE PATENTANMELDUNG

(11) **EP 1 221 287 A2**
(43) Veröffentlichungstag der Anmeldung: **10.07.2002**
(21) Anmeldenummer: 01129973.2
(22) Anmeldetag: 17.12.2001
(51) Int. Cl.: A23L 1/317, A22C 11/00

(54) **Verfahren zum Behandeln von Rohbrät**

(30) Priorität: 08.01.2001 DE 10100475; 17.01.2001 DE 10101958
(71) Anmelder: Kortschack, Fritz, 14089 Berlin (DE)
(72) Erfinder: Kortschack, Fritz, 14089 Berlin (DE)
(74) Vertreter: Kruspig, Volkmar, Dipl.-Ing.

(57) **Zusammenfassung**

Die Erfindung betrifft ein Verfahren zum Behandeln von Rohbrät, wobei dieses zunächst einer Entgasungsbehandlung, beispielsweise durch Evakuieren unterzogen wird. Im Anschluss daran erfolgt ein unmittelbares Inkontaktbringen des Rohprodukts mit der inneren Oberfläche einer oder mehrerer Rohre, wobei mindestens in einem der Rohre die Oberfläche des Rohbräts durch Energieeintrag mittels Mikrowellen, Infrarotstrahlung, direkte thermische Einwirkung über Heizmatten, erhitzte Rohrinnenflächen oder ähnliches so stark erwärmt wird, dass in Folge der Eiweißkoagulation sich eine stabile dünne Produktoberfläche ausbildet. Bevorzugt ist die mit dem Rohprodukt in Kontakt zu bringende Oberfläche des oder der Rohre PTFE-(Polytetrafluorethylen) beschichtet.

## Beschreibung

Die Erfindung betrifft ein Verfahren zum Behandeln von Rohbrät gemäß Oberbegriff des Patentanspruchs 1.

Bisher werden Bräte in Wursthüllen gefüllt, anschließend zur Stabilisierung erhitzt, eventuell gleichzeitig geräuchert oder direkt in ein heißes Wasserbad verbracht.
Die derart behandelten Rohprodukte weisen einen nicht unerheblichen Produktionsverlust unter anderem an Eiweiß, Geschmacksstoffen und Fett auf. Die nach dem Erhitzungsvorgang erforderlichen weiteren Verpackungsmanipulationen begünstigen eine Rekontamination der Halbfertigwaren. Zur Haltbarkeitsverlängerung müssen die Produkte häufig in den Transport- oder Endverbraucherpackungen zusätzlich pasteurisiert werden.

Aus der DD-Patentschrift 2 009 701 ist ein Verfahren zum Füllen von Formkästen für darmlose Wurst bekannt, wobei es dort darum geht, beim Einfüllen bzw. beim Füllen der Kartuschen Lufteinschlüsse im Brühwurstbrät zu vermeiden. Das Brät wird gemäß der bekannten Lehre in die Kartusche durch Rüttelbewegungen verbracht, wobei Schwingungen im Ultraschallbereich als bevorzugt dargestellt werden.

Die deutsche Offenlegungsschrift DE 29 50 384 A1 offenbart ein Verfahren und eine Vorrichtung zum Behandeln von Lebensmitteln mit ultraschallfrequenter Energie. Im einzelnen ist dort ausgeführt, dass der Garungsprozess von Kochgut auf dem Zerschlagen der Faserstruktur und dem Aufschließen der Enzyme des Garguts und damit verbunden auf einem mechanischen Garungsvorgang, der auf der Reibungswärme im Gargut beruht, zurückzuführen ist. Weiterhin wird erläutert, dass die Einwirkung von Ultraschallenergie das Gargut im Sinne einer Koagulation verändert. Grundsätzlich wird jedoch bei der DE 29 50 384 A1 davon ausgegangen, dass das Gargut zusätzlich zur Behandlung mit rein thermischer Energie durch Ultraschall zu beaufschlagen ist, um den Garungsprozess zu optimieren. Garung heißt dabei, dass das gesamte Gargut über das gesamte Volumen dem entsprechenden Prozess zu unterwerfen ist. Irgendwelche Anregungen, eine Eigenhaut zur Stabilisierung der Form von Einzelrohlingen durch Einwirkung von Ultraschallenergie auszubilden, insbesondere um die Zwischenstabilität eines Halbfertigprodukts zu erhöhen, sind der DE 29 50 384 A1 nicht zu entnehmen.

Aus dem Vorgenannten ist es Aufgabe der Erfindung, ein Verfahren zum Behandeln von Rohbrät anzugeben, wobei die Behandlung eine Stabilisierung der Form der Einzelrohlinge zur Folge haben soll und gleichzeitig zu vermeiden ist, dass das Rohprodukt an Bearbeitungsmitteln in unerwünschter Weise haftet, so dass ein Weiterbehandlungsprozess sich innerhalb einer Fertigungslinie anschließen kann.

Mit dem Verfahren soll eine natürliche stabilisierende und quasi Schutzschicht auf der Oberfläche des Bräts ausgebildet werden, so dass eine nachträgliche Weiterverarbeitung möglich ist.

Die Lösung der Aufgabe der Erfindung erfolgt mit einem Verfahren gemäß Definition nach Patentanspruch 1, wobei die Unteransprüche mindestens zweckmäßige Ausgestaltungen und Weiterbildungen darstellen.

Erfindungsgemäß wird das in üblicher Weise erstellte Rohbrät zunächst einer Entgasungsbehandlung, beispielsweise durch Evakuieren unterzogen. Im Anschluss daran erfolgt ein unmittelbares Inkontaktbringen des Rohprodukts mit der inneren Oberfläche eines oder mehrerer Rohre, wobei mindestens in einem der Rohre die Oberfläche des Rohbräts durch Energieeintrag mittels Mikrowellen, Infrarotstrahlung, direkte thermische Einwirkung über Heizmatten, erhitzte Rohrinnenflächen oder ähnliches so stark erwärmt wird, dass in Folge der Eiweißkoagulation eine stabile dünne Produktoberfläche entsteht.

Bevorzugt werden im Sinne einer kontinuierlichen Behandlung runde Rohre eingesetzt, wobei allerdings auch die Verwendung von bezogen auf das Produkt formgebenden Rohren denkbar ist. Die Behandlungsoberfläche der Rohre sollte vorzugsweise eine haftungsminimierende Mikrostruktur aufweisen.

Die Wärmeenergie, welche auf das Rohprodukt aufgebracht wird, muss so dosiert werden, dass das Eiweiß des Behandlungsguts an der Produktoberfläche koaguliert und sich die gewünschte gleichmäßig durchgehende Eigenhaut ausbildet.
Eine zu starke Wärmebeeinflussung lässt das im Produkt angelagerte Wasser spontan in den dampfförmigen Zustand übergehen und zerstört dadurch die geschlossene Eigenhaut (denaturiertes Eiweiß) des Behandlungsguts.

Die Eindringtiefe der Wärmeenergie in das Behandlungsgut, das ein Gemisch aus Eiweiß, Fett, Wasser, Salzen und Gewürzen darstellt, ist zu Beginn der Wärmebehandlung gering, so dass eine unerwünschte Wasserdampfbildung und damit Reißen des Brätstrangs ausgeschlossen ist.

Im Ergebnis der Behandlung setzt an der Oberfläche von Brät bei der Durchströmung eines Rohrs, das als Wärmeübertrager und/oder Volumenbegrenzer dient, eine Proteindenaturierung ein, wobei die Gleichmäßigkeit der stabilisierenden Eigenhautbildung durch weitgehend lufteinschlussfreies Brät und durch den auf die Durchlaufgeschwindigkeit des Bräts abgestimmten Wärmeeintrag bestimmt wird.

Die Kombination aus Wärmeeintrag, Durchlaufgeschwindigkeit und Behandlungsstrecke wird unter nachstehenden Aspekten aufeinander abgestimmt.
* Hohe Temperaturen und geringe Durchlaufgeschwindigkeiten lassen das Wasser spontan in den dampfförmigen Zustand übergehen und zerstören die denaturierte Eiweißschicht oder bei größerer Eindringtiefe den Volumenstrang.
* Hohe Temperaturen und sehr hohe Durchlaufgeschwindigkeiten kombiniert mit einer nur kurzen Behandlungsstrecke hinterlassen nur eine geringe technologische Wirkung auf der Brätoberfläche, es kommt zu keiner durchgehend deutlichen Eigenhautbildung.

Damit die Behand0lung erfolgreich durchgeführt werden kann, ist es notwendig, eine auf das Behandlungsgut und den Erwärmungsgrad (Denaturierung der Produktoberfläche oder sich anschließendes vollständiges Durchgaren) abgestimmte Behandlung vorzunehmen.
* Lange Behandlungsstrecken ermöglichen bei moderaten Temperaturen von ca. 70°C, dass das Eiweiß an der Oberfläche des Behandlungsguts koaguliert. Geringfügige Temperaturschwankungen während der Behandlung haben nur eine sehr geringe Auswirkung auf die Stärke der denaturierten Eiweißschicht.
* Kurze Behandlungsstrecken bedingen einen hohen Temperatureintrag und eine hohe Fließgeschwindigkeit. Geringfügige Abweichungen in der Füllgeschwindigkeit oder Temperaturführung wirken sich sehr deutlich auf das Ergebnis aus. Es kann zu Dampfbildung oder auch Untererhitzung kommen.

Im Behandlungsrohr kann auf die Brätoberfläche zur Geschmacksoder Farbbeeinflussung mittels einer z.B. ringförmigen Düse Flüssigkeit aufgebracht werden.

Nach der in vorstehender Weise vollzogenen Oberflächenbehandlung kann, wie dargelegt, eine Weiterbehandlung erfolgen, wobei es möglich ist, die Rohprodukte tiefgefroren zwischenzulagern oder eine endgültige Wärme- und/oder Hochdruckbehandlung unmittelbar anschließend auszuführen.
Durch Verlängerung der Behandlungsstrecke kann das Behandlungsgut vollständig durchgegart werden, die begrenzenden Parameter, wie z.B. Intensität des Wärmeeintrags sind zur Vermeidung von Fehlprodukten zu berücksichtigen.

In einer weiteren Ausführungsform der Erfindung wird der vorgeformte Rohling in einen Tiefkühlbereich überführt, wobei in äußerst kurzer Zeit eine Verfestigung der Oberfläche durch Gefrieren eintritt. Die Stärke oder Tiefe der gefroreren Randschicht kann über die Einwirkzeit gesteuert werden, wobei als Kühlmedium flüssiger Alkohol oder Stickstoff Verwendung findet. Alternativ können die Brätrohlinge in einer Schutzhülle, die eventuell zusätzlich formgebend wirkt, durch eine Tiefkühlzone bewegt werden.

Durch die sich ergebende starre Außenhaut wird das Handling des Rohprodukts erheblich erleichtert. So kann der Rohling über eine Rollebbahn geleitet und weiteren Fertigungs- oder Verpackungsschritten zugeführt werden. Die starre, gefrorene Außenhaut ermöglicht auch eine kurzfristige Bevorratung, z.B. in einem Magazin, bevor der Rohling verpackt wird. Auf diese Weise ist eine gleichmäßigere Beschickung einer Verpackungsmaschine und insgesamt ein kontinuierlicher Prozeß möglich.

In einem nächsten Schritt läßt sich der oberflächlich angefrorene Rohling zur Bevorratung und/oder Herstellung einer Tiefkühl-Verbraucherpackung tiefgefrieren. Alternativ besteht die Möglichkeit, den Rohling auf einer Tiefziehmaschine zu verpacken, anschließend zu erhitzen und/oder hochdruckzubehandeln. Die formstabilisierende Oberflächen-Tiefkühlbehandlung mit einem nur in einer Randzone eintretenden Gefriereffekt setzt nicht zwingend eine Denaturierung der Brätoberfläche in einer Sonotrode unter zusätzlicher Hitzeeinwirkung oder in einem Rohr mit mikrostrukturierter Beschichtung unter Hitzeeinwirkung voraus. So kann das Brät aus einem normalen Füllrohr entnommen und so vorgeformt in den Tiefkühlbereich überführt werden, um die gewünschte Zwischenstabilisierung zu erreichen. Hier ist allerdings darauf abzustellen, daß der Endverbraucher den dann verpackten und später tiefgefrorenen Rohling, ohne ihn vorher aufzutauen, zügig erhitzt, damit zunächst die äußere Eiweißschicht koaguliert und der Rohling seine gewünschte Form beibehält.

Im Gegensatz zum Bekannten wird der ansonsten unvermeidliche Verlust von Eiweiß, Fett, Geschmacksstoffen und so weiter verringert und die Produktqualität erhöht. Gleichzeitig ist eine Reduktion der Durchlaufzeiten bei der kontinuierlichen Produktion erreichbar, so dass auch aus technologischer Sicht eine Kostensenkung gegeben ist. Die Gefahr der Rekontamination durch die erforderliche Verpackungsmanipulation nach der Pasteurisierung wird bei dem vorgestellten Verfahren ausgeschaltet.

Durch den Einsatz der erwähnten formgebenden Rohre ist jede denkbare Produktgestaltung bzw. Produktform erreichbar. In dem Fall, wenn dem Brät für rohe Bratwürste z.B. eine Ring- oder Schneckenform gegeben wird, bleibt diese Form erhalten und die Einzellagen des Bräts haften nicht aneinander.
Durch die Oberflächenbehandlung von Rohwurstbrät kann der ansonsten notwendige formstabilisierende Darm entfallen, so dass sich die Verarbeitbarkeit verbessert und auch eine nachträgliche Reifung möglich ist.

Die Erfindung soll anhand eines Ausführungsbeispiels näher erläutert werden.

Wienerbrät wurde bei einer Temperatur von im wesentlichen 8°C aus dem Kutter entnommen und zur weiteren Entgasung durch einen Füllwolf gefördert.
Der Förderstrom des Brätstrangs wurde dann durch ein Behandlungsrohr geführt, welches unmitelbar an das Füllrohr des Förderaggregats angeschlossen war. Über den Förderstrom lässt sich der Fülldruck in dem Rohr einstellen, wobei sich zeigte, dass bei höherem Druck sich eine gleichmäßigere Eigenhautbildung auf dem Rohprodukt ausbildete.

Die einsetzende Denaturierung bei einer Wärmebehandlung von 110°C reichte etwa 1 mm von der Oberfläche in das Brät hinein.

Im Anschluss wurde der Brätstrom quergeteilt, wobei die Abschnitte auf ein Lochblech überführt wurden. Eine unerwünschte Haftung des geteilten Brätstroms an Kunststoff- oder Metalloberflächen wurde nicht beobachtet. Aneinandergelegte Würste konnten ohne späteres Anhaften in Kunststoffbeuteln unter Vakuum versetzt und auf 78°C erwärmt werden.

Weiterhin wurde erfolgreich nachgewiesen, dass eine Bearbeitung der verfestigten Oberfläche des Bräts durch Besprühen mit Flüssigrauch möglich und eine Bräunung erzielbar ist.

Bei einer Ausgestaltung der Behandlungsrohre aus PTFE wurden diese außenseitig mit einer Heizmatte umgeben, wobei eine Oberflächentemperatur im Bereich von ca. 140°C verzeichnet wurde.

Damit sich Eiweißpartikel nicht an der Innenfläche des Behandlungsrohrs festsetzen und dadurch die Eigenhaut des Behandlungsguts zerstören, können Pfropfen als Begrenzer eingesetzt werden.

Das spontane Anhaften des Eiweißes an den Innenflächen der Behandlungsrohre nimmt mit steigender Behandlungstemperatur zu.

## Patentansprüche

1. Verfahren zum Behandeln von Rohbrät,
**gekennzeichnet durch** folgende Schritte:
- Entgasen des Rohbräts;
- unmittelbares Inkontaktbringen des Rohprodukts mit der Oberfläche eines oder mehrerer formgebender Rohre, wobei mindestens in einem der Rohre die Oberfläche des Rohbräts **durch** Energieeintrag so stark erwärmt wird, dass in Folge der Eiweißkoagulation sich eine stabile dünne Produktoberfläche ausbildet.

2. Verfahren nach Anspruch 1,
**dadurch gekennzeichnet, dass**
das Rohprodukt durch die Rohre unter Druck stehend geführt wird.

3. Verfahren nach einem der vorangegangenen Ansprüche,
**dadurch gekennzeichnet, dass**
das Roh- oder Garprodukt einer Behandlung mit Flüssigrauch oder anderen Geschmacks- oder Dekorstoffen unterzogen wird.

4. Verfahren nach Anspruch 1,
**dadurch gekennzeichnet, dass**
das Rohprodukt zum Entgasen evakuiert wird.

5. Verfahren nach einem der vorangegangenen Ansprüche,
**dadurch gekennzeichnet, dass**
die mit dem Rohprodukt in Kontakt zu bringende Oberfläche des oder der Rohre PTFE-beschichtet ist.

6. Verfahren nach einem der vorangegangenen Ansprüche,
**dadurch gekennzeichnet, dass**
der Energieeintrag mittels Mikrowellen, Infrarotstrahlung, direkter thermischer Einwirkung über Heizmatten oder anderweitig erhitzte Rohrinnenflächen erfolgt.

7. Verfahren nach einem der vorangegangenen Ansprüche,
**dadurch gekennzeichnet, daß**
der vorgeformte Rohling einer kurzzeitigen Tiefkühlbehandlung zum weiteren Verfestigen der Oberfläche für eine verbesserte Handhabung im weiteren, insbesondere Verpackungs- sowie zur Bevorratung im Fertigungsprozeß zugeführt wird.

8. Verfahren nach Anspruch 7,
**dadurch gekennzeichnet, daß**
der vorgeformte Rohling vor der Tiefkühlbehandlung in eine gegebenenfalls formgebende Schutzhülle verbracht wird.

9. Verfahren nach Anspruch 7 oder 8,
**dadurch gekennzeichnet, daß**
als Kühlmedium ein Alkohol verwendet wird, um gleichzeitig der Oberfläche des vorgeformten Rohlings im vorgegebenen Maße Wasser zu entziehen.
